# EUROPEAN PATENT APPLICATION

(11) **EP 2 579 148 A2**
(43) Date of publication of application: **10.04.2013**
(21) Application number: 12183078.0
(22) Date of filing: 05.09.2012
(51) Int. Cl.: G06F 3/12

(54) **Printer controlling terminal, image forming apparatus, method of controlling print and method of imaging forming**

(30) Priority: 07.10.2011 KR 20110102624
(71) Applicant: Samsung Electronics Co., Ltd., Suwon-si, Gyeonggi-do, 443-742 (KR)
(72) Inventor: Jang, Young-dae, Seoul (KR)
(74) Representative: Waddington, Richard

(57) **Abstract**

A printer controlling terminal includes a user interface unit to input a print command for a printing job; an analysis unit to analyze a complexity of the printing job; a determination unit to determine whether the resource save mode is applied according to the analyzed complexity; a printer driver unit to generate printing data of the printing job according to the determination result; and a communication interface unit to transmit the generated printing data to the image forming apparatus.

## Description

### BACKGROUND OF THE INVENTION

### 1. Field of the Invention

The present general inventive concept relates generally to a printer controlling terminal, an image forming apparatus, a print controlling method, and an image forming method. More particularly, the present general inventive concept relates to a printer controlling terminal to selectively apply a resource save mode defined in an image forming apparatus by determining complexity of a job, an image forming apparatus, a print controlling method, and an image forming method.

### 2. Description of the Related Art

As the supply of computers increases, the supply rate of computer peripherals gradually increases. Representative examples of the computer peripheral can include image forming apparatuses such as a printer, a scanner, a copier, and a multifunction device which integrates two or more of the printer, scanner, and copier functions.

In a printing environment, as a user uses more consumable goods, the profit with respect to the consumable goods is maximized in terms of the business. However, the increase of the costs relating to the consumable goods in the recent printing environment is emerging as a negative factor which affects corporate management. In addition, as awareness and regulations on environmentally-friendly business spread in the society, the introduction of environmentally-friendly features into the printing environment is promoted.

In this regard, recent image forming apparatuses support a resource save mode (or an ECO mode) to save paper and/or toner.Specifically, the resource save mode collectively applies printing options to save paper and/or the toner in the image forming apparatus. When a user prints in a printer controlling terminal using the image forming apparatus operating in the resource save mode, the printer controlling terminal receives information with respect to the resource save mode from the image forming apparatus, generates printing data according to the printing options applied in the resource save mode, and executes the printing by transmitting the generated printing data to the image forming apparatus.

When such a resource save mode is applied, without a user's separate option setting, the resource save mode is applied and the printing job is conducted regardless of the user's intention. As a result, the user, who does not know that the resource save mode is set, obtains the print applied with the unexpected resource save mode without realizing it.

Further, when the printing data which is not adequate for printing in the resource save mode because of a higher image rate of the complex image and the text, and the complex image and the text are printed in the resource save mode, the user has to reset to release the resource save mode and then print again, which wastes the resources.

### SUMMARY OF THE INVENTION

The present general inventive concept provides a printer controlling terminal to selectively apply a resource save mode set in an image forming apparatus by analyzing a complexity of a job, a print controlling method, and an image forming method.

Additional features and utilities of the present general inventive concept will be set forth in part in the description which follows and, in part, will be obvious from the description, or may be learned by practice of the general inventive concept.

According to the present invention there is provided an apparatus and method as set forth in the appended claims. Other features of the invention will be apparent from the dependent claims, and the description which follows.

A printer controlling terminal connectable with an image forming apparatus having a resource save mode includes a user interface unit to input a print command of a printing job; an analysis unit to analyze complexity of the printing job; a determination unit to determine whether the resource save mode is applied according to the analyzed complexity; a printer driver unit to generate printing data of the printing job according to the determination result; and a communication interface unit to transmit the generated printing data to the image forming apparatus.

The analysis unit may analyze the complexity of the printing job by analyzing whether the printing job is at least one of a text type, a photo type, a copied type, and a mixed type.

The analysis unit may analyze the complexity of the printing job using a Discrete Cosine Transform (DCT).

The analysis unit may analyze the complexity of the printing job by analyzing whether the printing job is a color image or a monochrome image.

The printer controlling terminal may further include a storage unit to store criterion information to apply the resource save mode. The determination unit may determine whether the resource save mode is applied to the printing job by comparing the analyzed complexity and the stored criterion information.

The user interface unit may display a user interface window which comprises a first region to display a criterion to apply the resource save mode and a second region to set whether to apply the criterion, and the storage unit may store information set in the second region, as the criterion information.

When the resource save mode is not applied according to the determination result, the user interface unit may display that the printing is processed without applying the resource save mode.

The communication interface unit may receive information with respect to the resource save mode from the image forming apparatus. The determination unit may determine based on the received resource save mode information, whether the image forming apparatus operates in the resource save mode, and determine whether the resource save mode is applied to the printing job according to the analyzed complexity and whether the image forming apparatus operates in the resource save mode.

The resource save mode information may include information about whether the image forming apparatus operates in the resource save mode, and information about a printing option applied when the image forming apparatus operates in the resource save mode.

When the resource save mode is applied, the printer driver unit may generate the printing data by utilizing the printing option applied when the image forming apparatus operates in the resource save mode.

An image forming apparatus having a resource save mode includes an analysis unit to, when a job execution command is input, analyze a complexity of an input job; a determination unit to determine whether the resource save mode is applied to the job, according to the analyzed complexity; and an image forming unit to render the job according to the determination result, and to print the rendered job.

The analysis unit may analyze the complexity of the printing job by analyzing whether the printing job is at least one of a text type, a photo type, a copied type, and a mixed type.

The analysis unit may analyze the complexity of the printing job using a DCT.

The analysis unit may analyze the complexity of the printing job by analyzing whether the printing job is a color image or a monochrome image.

The image forming apparatus may further include a storage unit to store criterion information to apply the resource save mode. The determination unit may determine whether the resource save mode is applied to the printing job by comparing the analyzed complexity and the stored criterion information.

The image forming apparatus may further include a user interface unit to display a user interface window which comprises a first region to display a criterion to apply the resource save mode and a second region to set whether to apply the criterion. The storage unit may store information set in the second region as the criterion information.

The image forming apparatus may further include a user interface unit to, when the resource save mode is not applied, display that the printing is processed without applying the resource save mode.

The image forming apparatus may further include a scanning unit to scan a document. The analysis unit may analyze complexity of an image scanned by the scanning unit.

The image forming apparatus may further include a communication interface unit to receive printing data. The analysis unit may analyze complexity of the received printing data.

When the resource save mode is applied, the image forming unit may render the job by utilizing a printing option applied in the resource save mode.

A print controlling method of a printer controlling apparatus connectable with an image forming apparatus having a resource save mode, includes inputting a print command of a printing job; analyzing a complexity of the printing job; determining whether the resource save mode is applied, according to the analyzed complexity; generating printing data of the printing job according to the determination result; and transmitting the generated printing data to the image forming apparatus.

The analyzing operation may analyze the complexity of the printing job by analyzing whether the printing job is at least one of a text type, a photo type, a copied type, and a mixed type.

The analyzing operation may analyze the complexity of the printing job using a DCT.

The analyzing operation may analyze the complexity of the printing job by analyzing whether the printing job is a color image or a monochrome image.

The determining operation may determine whether the resource save mode is applied to the printing job by comparing the analyzed complexity and prestored criterion information to apply the resource save mode.

The print controlling method may further include displaying a user interface window which comprises a first region to display a criterion to apply the resource save mode and a second region to set whether to apply the criterion; and storing information set in the second region, as the criterion information.

The print controlling method may further include when the resource save mode is not applied, displaying that the printing is processed without applying the resource save mode.

The print controlling method may further include receiving information of the resource save mode from the image forming apparatus. The determining operation may determine, based on the received resource save mode information, whether the image forming apparatus operates in the resource save mode, and determine whether the resource save mode is applied to the printing job according to the analyzed complexity and whether the image forming apparatus operates in the resource save mode.

The resource save mode information may include information about whether the image forming apparatus operates in the resource save mode, and information about a printing option applied when the image forming apparatus operates in the resource save mode.

When the resource save mode is applied, the printing data generating operation may generate the printing data by utilizing the printing option applied when the image forming apparatus operates in the resource save mode.

An image forming method of an image forming apparatus having a resource save mode, includes, when a job execution command is input, analyzing a complexity of an input job; determining whether the resource save mode is applied to the job, according to the analyzed complexity; rendering the job according to the determination result; and printing the rendered job.

The analyzing operation may analyze the complexity of the printing job by analyzing whether the printing job is at least one of a text type, a photo type, a copied type, and a mixed type.

The analyzing operation may analyze the complexity of the printing job using a DCT.

The analyzing operation may analyze the complexity of the printing job by analyzing whether the printing job is a color image or a monochrome image.

The determining operation may determine whether the resource save mode is applied to the printing job by comparing the analyzed complexity and prestored criterion information to apply the resource save mode.

The image forming method may further include displaying a user interface window which comprises a first region to display a criterion to apply the resource save mode and a second region to set whether to apply the criterion; and storing information set in the second region, as the criterion information.

The image forming method may further include when the resource save mode is not applied, displaying that the printing is processed without applying the resource save mode.

The image forming method may further include scanning a document. The analyzing operation may analyze complexity of a scanned image.

The image forming method may further include receiving printing data. The analyzing operation may analyze complexity of the received printing data.

When the resource save mode is applied, the rendering operation may render the job by utilizing a printing option applied in the resource save mode.

Exemplary embodiments of the present general inventive concept also provide a print controlling method of a printer controlling apparatus connectable with an image forming apparatus having a resource save mode, including: analyzing a complexity of a printing job; and selectively applying the resource save mode to a printing job in accordance with the analyzed complexity.

The analyzing operation may further include analyzing the complexity of the printing job by analyzing whether the printing job is at least one of a text type, a photo type, a copied type, and a mixed type.

The selectively applying operation may further include: comparing the analyzed complexity and criterion information prestored in one of: a storage unit of the printer controlling apparatus and the image forming apparatus, and determining whether the resource save method is applied.

Exemplary embodiments of the present general inventive concept also provide a printer controlling terminal connectable with an image forming apparatus having a resource save mode, including: an analysis unit to analyze a complexity of a printing job; and a determination unit to selectively apply the resource save mode to a printing job in accordance with the analyzed complexity.

The analysis unit may analyze the complexity of the printing job by analyzing whether the printing job is at least one of a text type, a photo type, a copied type, and a mixed type.

The printer controlling terminal may further include: a storage unit to store criterion information to apply the resource save mode, wherein the determination unit determines whether the resource save mode is applied to the printing job by comparing the analyzed complexity and the stored criterion information.

### BRIEF DESCRIPTION OF THE DRAWINGS

These and/or other features and utilities of the present general inventive concept will become apparent and more readily appreciated from the following description of the embodiments, taken in conjunction with the accompanying drawings of which:

FIG. 1 is a unit diagram of a printer controlling terminal according to an exemplary embodiment of the present general inventive concept;

FIG. 2 is a unit diagram of an image forming apparatus according to an exemplary embodiment of the present general inventive concept;

FIG. 3 is a detailed diagram of an analysis unit of FIG. 1 or an analysis unit of FIG. 2;

FIG. 4 is a diagram of criterion information according to an exemplary embodiment of the present general inventive concept;

FIGS. 5, 6 and 7 are diagrams of various user interface windows displayed in a user interface unit of FIG. 1 or a user interface unit of FIG. 2;

FIG. 8 is a flowchart of a print controlling method according to an exemplary embodiment of the present general inventive concept; and

FIG. 9 is a flowchart of an image forming method according to an exemplary embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below to explain the present general inventive concept by referring to the figures.

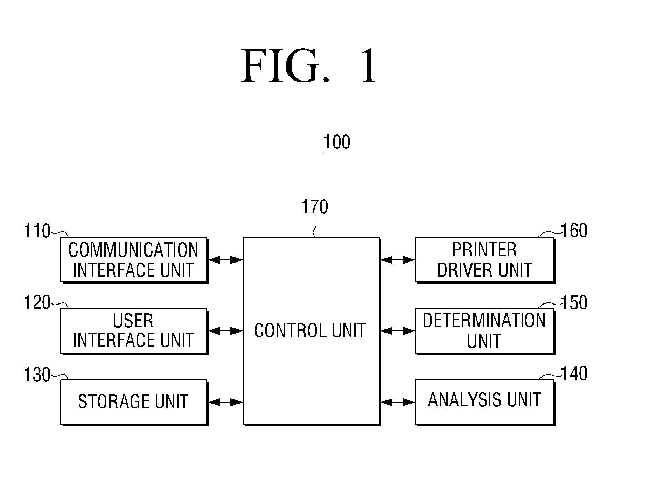

FIG. 1 is a unit diagram of a printer controlling terminal according to an exemplary embodiment of the present general inventive concept.

Referring to FIG. 1, the printer controlling terminal 100 includes a communication interface unit 110, a user interface unit 120, a storage unit 130, an analysis unit 140, a determination unit 150, a printer driver unit 160, and a control unit 170.

The printer controlling terminal 100 supports a resource save mode and is connected to an image forming apparatus which prints printing data. The printer controlling terminal 100 includes not only a personal computer, but also a notebook, a PDA, a PMP, a mobile phone, and so on.

The communication interface unit 110 interconnects the printer controlling terminal 100 with an external device. The communication interface unit 110 can access the image forming apparatus over a Local Area Network (LAN) and Internet, and through a Universal Serial Bus (USB) port.

The communication interface unit 110 receives information of the resource save mode from the image forming apparatus. Herein, the information of the resource save mode can include information about whether the image forming apparatus operates in the resource save mode, information about printing options applied when the image forming apparatus operates in the resource save mode, and applicable attributes (e.g., a toner save option, a resolution option, etc.) of the printing options.

The printing options applied in the resource save mode may include a duplex printing option, a multipage output per paper option, a reduced printing option, a grayscale output option, a toner save/density adjust option, a print quality/resolution option, a batch output option, a blank page deletion option, a background deletion option, and a combination of the printing options. The printing options applied in the resource save mode may be set as default by a manufacturer of the image forming apparatus, and may be changed according to setting of a manager. The information of the resource save mode may be received when a print command of a printing job is input from the user. The resource save mode information may be received and prestored periodically, and the prestored information may be used.

The communication interface unit 110 transmits the printing data to the image forming apparatus. In detail, the communication interface unit 110 may transmit the printing data generated by the printer driver unit 160, to be explained, to the image forming apparatus.

The user interface unit 120 includes a plurality of function keys allowing the user to set or select various functions supported by the printer controlling terminal 100, and displays various information provided from the printer controlling terminal 100. The user interface unit 120 may be implemented using a device, such as a touchpad, which realizes the input and the output at the same time, and a device which combines a mouse and a monitor.

The user interface unit 120 receives the print command for the printing job. In detail, the user may select the printing job (or a printing file) to output using the user interface unit 120, and select the printing option to apply to the selected printing job.

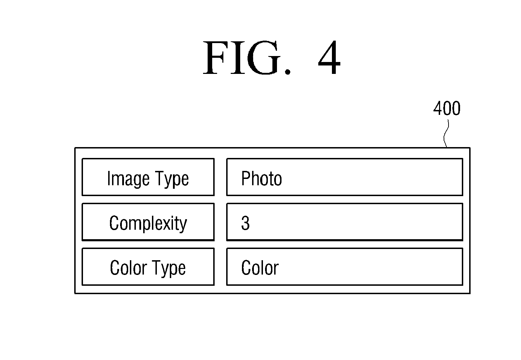

The user interface unit 120 sets criterion information to apply the resource save mode. In detail, the user interface unit 120 may display a user interface window including a first region displaying the application criterion of the resource save mode and a second region to set whether to apply the criterion, and set the application criterion through the second region. Herein, the criterion information is used to determine data complexity of the printing job, and may have values as shown in FIG. 4.

The user interface unit 120 displays the received resource save mode information. In detail, the user interface unit 120 may display the resource save mode information received through the communication interface unit 110. For example, when the image forming apparatus operates in the resource save mode, the user interface unit 120 may display the resource save mode operation to the user. In so doing, the printing options applied to the resource save mode may be displayed together. In implementations, the received resource save mode information may be displayed only when the image forming apparatus operates in the resource save mode.

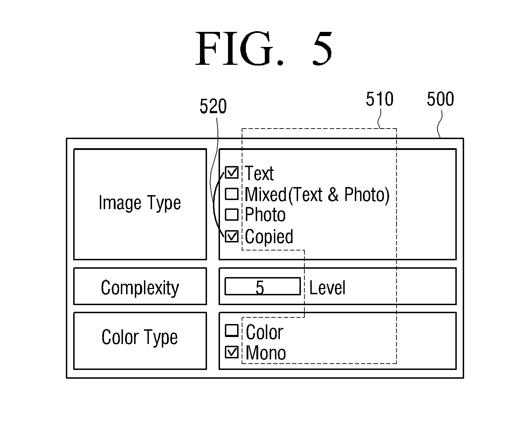

When determining that the resource save mode is not applied, the user interface unit 120 may display the printing progress without applying the resource save mode. In detail, when determining that the resource save mode is not applied because the printing job is complex although the resource save mode is set in the image forming apparatus, the user interface unit 120 may display a message informing that the printing is processed without applying the resource save mode. Various user interface window displayable in the user interface unit 120 will be explained by referring to FIGS. 5, 6 and 7.

The storage unit 130 may store various printing jobs. The storage unit 130 may store the resource save mode information received through the communication interface unit 110 as mentioned above. The storage unit 130 may temporarily store the printing data generated by the printer driver unit 160. The storage unit 130 may store the criterion information to apply the resource save mode. The criterion information may be set as the default by the manufacturer of the image forming apparatus, and may be changed according to the setting of the manager.

Meanwhile, the storage unit 130 may be implemented using a storage medium in the printer controlling terminal 100 and an external storage medium, for example, using a removable disk including a USB memory and a web server over the network.

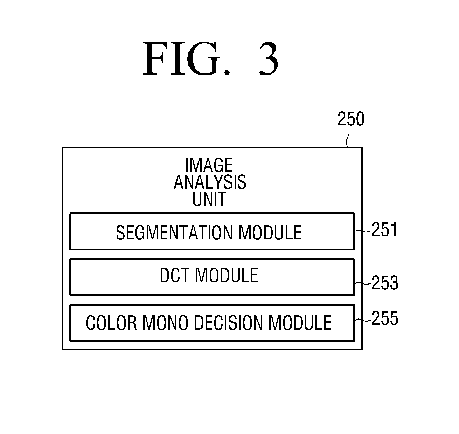

The analysis unit 140 analyzes the complexity of the printing job. In detail, the analysis unit 140 may include a segmentation unit 251, a Discrete Cosine Transform (DCT) unit 253, and a color mono decision unit 255 as shown in FIG. 3.

The segmentation unit 251 analyzes a type of the printing job. In detail, the segmentation unit 251 may analyze whether the printing job is a text type, a photo type, a copied type, or a mixed type, based on correlation between pixels in the printing jobs, that is, based on a brightness difference between one pixel and its neighboring pixel. The segmentation unit 251 may analyze whether the printing job has high or low complexity by comparing the analyzed type of the printing job with the criterion information. For example, when the high complexity type is set to the photo type and the mixed type and the analyzed type of the printing job is the photo type and the mixed type, the segmentation unit 251 may determine that the complexity of the corresponding printing job is high.

The DCT module/unit 253 analyzes the complexity of the printing job using the DCT. In detail, after imaging the printing job, the DCT unit 253 may determine the complexity type by converting a frequency of the image. When the DCT is applied to the image, the image of the high complexity type outputs a high value, and the simple image type outputs a low value. Hence, the DCT unit 253 may express the output value of the DCT within a certain range, and analyze the complexity of the printing job by comparing the complexity value set in the criterion information with the expressed value. For example, the DCT unit 253 expresses the DCT value of the image as 0 - 10, and the value set in the criterion information is 5. The DCT unit 253 may analyze that the complexity of the corresponding printing job is high when the numerical value of the printing job exceeds 5, and analyze that the complexity of the corresponding printing job is low when the numerical value of the printing job falls below 5.

The color mono decision unit 255 analyzes a color image or a monochrome image of the printing job. In detail, the color mono decision unit 255 may convert the printing job into the YCbCr color space and analyze whether the printing job is the color image or the monochrome image based on the Cb and Cr channel components, excluding the Y channel. The color mono decision unit 255 may analyze the complexity of the printing job by comparing the analyzed color/monochrome image of the printing job with the criterion information. For example, when the color image has high complexity, and the analyzed color type of the printing job is the color image, the color mono decision unit 255 may determine that the complexity of the corresponding printing job is high.

So far, while the complexity is analyzed in only three ways, the complexity may be analyzed in other manners in implementations.

The analysis unit 140 may analyze the complexity of the printing job using the above three manners. In detail, when any one of the three manners outputs high complexity, the analysis unit 140 may analyze that the corresponding printing job has high complexity. While high complexity is determined when any one of the three manners concludes high complexity, high complexity may be determined when two of the three manners conclude high complexity or only when all of the three manners conclude high complexity.

The determination unit 150 determines whether the image forming apparatus operates in the resource save mode, based on the received information of the resource save mode. In detail, based on the information about whether the image forming apparatus operates in the resource save mode, when information is received in the resource save mode through the communication interface unit 110, the determination unit 150 may determine whether the image forming apparatus operates in the resource save mode.

The determination unit 150 determines whether the resource save mode is applied according to the analyzed complexity. In detail, when the image forming apparatus operates in the resource save mode, and the analysis result of the analysis unit 140 determines low complexity, the determination unit 150 may determine that the resource save mode is applied. When the image forming apparatus does not operate in the resource save mode, or when the resource save mode is applied, but the analysis result of the analysis unit 140 determines high complexity, the determination unit 150 may determine that the resource save mode is not applied.

The printer driver unit 160 generates the printing data of the printing job. In detail, when the resource save mode is not applied according to the determination result of the determination unit 150, the printer driver unit 160 may generate the printing data by applying the printing options selected through the user interface unit 120 to the selected printing job.

When the resource save mode is applied according to the determination result of the determination unit 150, the printer driver unit 160 may generate the printing data of the printing job by utilizing the printing options applied in the resource save mode and the attribute values of the printing options.

The control unit 170 controls the units of the printer controlling terminal 100. In detail, the control unit 170 may receive the print command for the printing job through the user interface unit 120, control the communication interface unit 110 to receive the resource save mode information from the image forming apparatus, control the determination unit 150 to determine whether the image forming apparatus operates in the resource save mode, control the analysis unit 140 to analyze the complexity of the corresponding printing job when the image forming apparatus operates in the resource save mode, and control the determination unit 150 to determine whether the resource save mode is applied according to the analysis result.

The control unit 170 may control the printer driver unit 160 to generate the printing data of the printing job selected by the user, and may control the communication interface unit 110 to transmit the generated printing data to the image forming apparatus. When determining that the image forming apparatus operates in the resource save mode and complexity is low, the control unit 170 may control the printer driver unit 160 to generate the printing data by utilizing the printing options applied in the resource save mode.

Hence, for the printing job of high complexity, the printer controlling terminal 100 may print the printing job in a normal mode without the user's separate setting or selection. Even for the printing job of the complexity, the printer controlling terminal 100 may print the printing job in the resource save mode without the user's separate setting or selection.

Meanwhile, the above operations to analyze the complexity by analyzing the printing job and determining whether the resource save mode is applied may be applied to the image forming apparatus, which is explained below.

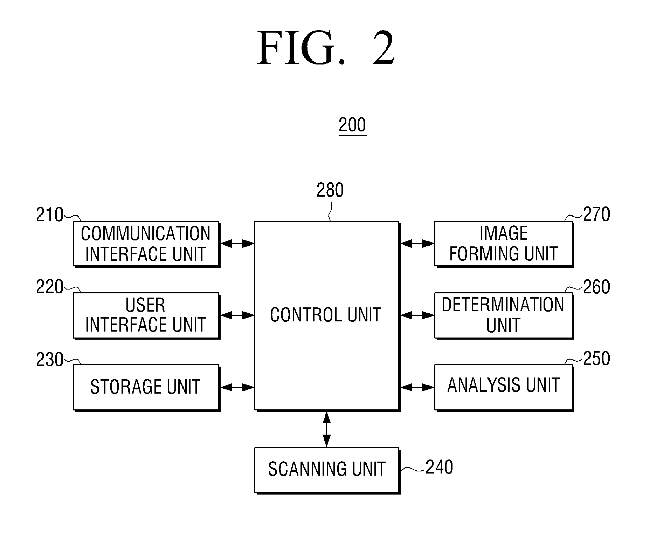

FIG. 2 is a unit diagram of an image forming apparatus according to an exemplary embodiment of the present general inventive concept.

Referring to FIG. 2, the image forming apparatus 200 may include a communication interface unit 210, a user interface unit 220, a storage unit 230, a scanning unit 240, an analysis unit 250, a determination unit 260, an image forming unit 270, and a control unit 280.

The communication interface unit 210 interconnects the image forming apparatus 200 with an external device. The communication interface unit 210 may access the printer controlling terminal over the LAN and the Internet, and through the USB port. The communication interface unit 210 may receive the printing data.

The communication interface unit 210 may transmit the resource save mode information according to the request of the printer controlling terminal. Herein, the resource save mode information may include the information about whether the image forming apparatus operates in the resource save mode, the information about the printing options applied when the image forming apparatus operates in the resource save mode, and the applicable attributes (e.g., a toner save option, a resolution option, etc.) of the printing options. The printing options applied in the resource save mode may be set as the default by the manufacturer of the image forming apparatus 200, and may be changed according to the settings of the manager.

The user interface unit 220 includes a plurality of function keys allowing the user to set or select various functions supported by the image forming apparatus 200, and displays various information provided from the image forming apparatus 200. The user interface unit 220 may be implemented using a device, such as touchpad, which realizes the input and the output at the same time, and a device which combines a mouse and a monitor.

The user interface unit 220 receives a job execution command. Herein, the job execution command may be a copy command to scan and print a document, or a print command to print a file stored to the image forming apparatus 200. While the job execution command is input through the user interface unit 220 in this embodiment, the job execution command, which is the print command for the printing data, may be input through the communication interface unit 210.

The user interface unit 220 sets the criterion information to apply the resource save mode. In detail, the user interface unit 220 may display a user interface window including a first region displaying the application criterion of the resource save mode and a second region to set whether to apply the criterion, and may set the criterion through the second region. Herein, the criterion information is used to determine the data complexity of the printing job, and may have the values as shown in FIG. 4.

The user interface unit 220 may display whether the resource save mode is set. In detail, when the image forming apparatus 200 operates in the resource save mode, the user interface unit 220 may display the resource save mode operation to the user. At this time, the printing options applied in the resource save mode may be displayed together.

When determining that the resource save mode is not applied, the user interface unit 220 may display the printing in progress without applying the resource save mode. In detail, when the job complexity is high although the resource save mode is set in the image forming apparatus, the user interface unit 220 may display a message informing the user that the printing is processed without applying the resource save mode. Various user interface windows displayable in the user interface unit 220 are now explained by referring to FIGS. 5, 6 and 7.

The storage unit 230 may store various files. The storage unit 230 may store the printing data received through the communication interface unit 210 as stated earlier. The storage unit 230 may store the criterion information to apply the resource save mode. The criterion information may be the default value provided by the manufacturer, or the value set through the user interface unit 220.

Meanwhile, the storage unit 230 may be implemented using a storage medium in the image forming apparatus 200 and an external storage medium, for example, using a removable disk, including a USB memory and a web server over the network.

The scanning unit 240 scans the document. In detail, when the user's job execution command is the copy command, the scanning unit 240 may scan the document and generate a scan image.

The analysis unit 250 analyzes the job complexity. In detail, when the user's job execution command is the copy command, the analysis unit 250 may analyze the complexity of the scan image generated by the scanning unit 240. When the user's job execution command is the print command, the analysis unit 250 may analyze the complexity of the file stored to the storage unit 230 or the complexity of the printing data received through the communication interface unit 210. The detailed operations of the analysis unit 250 are the same as those of the analysis unit 140 of FIG. 1 and shall be omitted here.

The determination unit 260 determines whether the resource save mode is appliedaccording to the analyzed complexity. In detail, when the image forming apparatus 200 operates in the resource save mode and the analysis result of the analysis unit 250 concludes low complexity, the determination unit 260 may determine that the resource save mode is applied. When the image forming apparatus 200 does not operate in the resource save mode, or when the resource save mode is applied, but the analysis result of the analysis unit 250 concludes high complexity, the determination unit 260 may determine that the resource save mode is not applied.

The image forming unit 270 renders the job and prints the rendered job. In detail, when the determination result of the determination unit 260 indicates no resource save mode, the image forming unit 270 may render the job by applying the printing options selected through the user interface unit 220 or the communication interface unit 210 to the selected job, and print the rendered job.

When the determination result of the determination unit 260 indicates that the resource save mode is applied, the image forming unit 270 may render the job by utilizing the printing options applied in the resource save mode and the attribute values of the printing options, and print the rendered job.

The control unit 280 controls the units of the image forming apparatus 200. In detail, upon receiving the job execution command through the communication interface unit 210 or the user interface unit 220, the control unit 280 may control the analysis unit 250 and the determination unit 260 to determine whether the resource save mode is applied according to the job complexity, and control the image forming unit 270 to print the job according to the determination result.

For the job of high complexity, the image forming apparatus 200 may print the job in a normal mode without the user's separate setting or selection. Even for the printing job of low complexity, the image forming apparatus 200 may print the job in the resource save mode without the user's separate setting or selection.

While the printing options of the resource save mode are not collectively applied to the job of high complexity in FIGS. 1 and 2, part of the printing options of the resource save mode cannot be selectively applied according to the complexity type in the implementations. For example, when the text type is set as the criterion information, and the type of the input job is the text type, only the printing option N-Up of the resource save mode is not applied, and the other options may be applied.

FIG. 4 is a diagram of an example of the criterion information according to an exemplary embodiment of the present general inventive concept.

Referring to FIG. 4, the criterion information is the basis to determine the complexity. The photo type, the DCT value of 3, and the color image are set as the criterion information 400 in FIG. 4.

Hence, the analysis unit 140 may determine high complexity of the corresponding job when the printing job is the photo type, the DCT value is greater than 3, or the job is the color image.

Such criterion information may be set as the default by the manufacturer, and may be changed by the manager.

Meanwhile, while high complexity is determined when one or more of the three determination conditions is satisfied, high complexity may also be determined only when two or more of the three conditions are satisfied or all of the three conditions are satisfied.

FIGS. 5, 6 and 7 depict various user interface windows which may be displayed in the user interface unit of FIG. 1 or the user interface unit of FIG. 2.

In detail, FIG. 5 shows the user interface window to set the criterion information to apply the resource save mode.

Referring to FIG. 5, the user interface window 500 includes a first region 510 displaying the criteria to apply the resource save mode, and a second region 520 to apply the criteria.

The first region 510 displays examples of the criteria to apply the resource save mode.

The second region 520 determines whether to set the criteria of the first region 510 as the criterion information.

When the user selects the criterion in the second region 520, the selected criterion may be stored as the criterion information in the storage units 130 and 230.

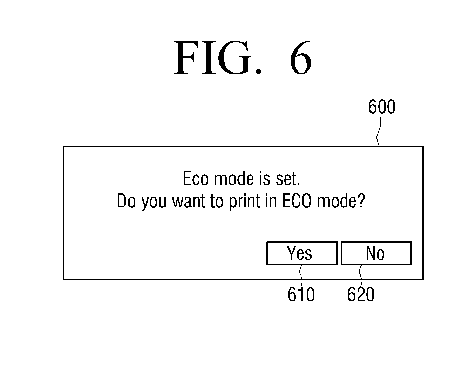

FIG. 6 depicts the user interface window to display the resource save mode information.

Referring to FIG. 6, the user interface window 600 includes a region displaying that the resource save mode is set, a "Yes" region 610, and a "No" region 620.

In the "Yes" region 610, the user confirms that the current printing job is processed in the resource save mode. When the user selects this region 610, the printer driver unit 160 can generate the printing data of the printing job by applying the printing options applied in the resource save mode.

Meanwhile, when the corresponding user interface window is displayed in the image forming apparatus 200, the image forming unit 270 may render an image by applying the printing options applied in the resource save mode.

In the "No" region 620, the user confirms that the current printing job is processed in the normal mode, not in the resource save mode. When the user selects this region 620, the printer driver unit 160 may generate the printing data of the printing job by applying the printing options applied in the normal mode.

When the corresponding user interface window is displayed in the image forming apparatus 200, the image forming unit 270 may render an image by applying the printing options applied in the normal mode.

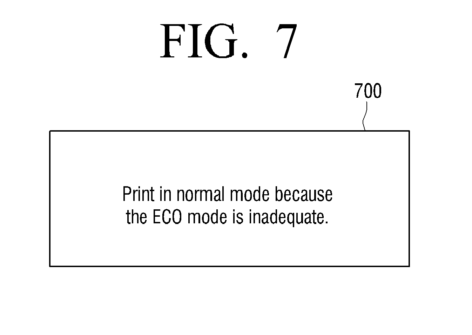

FIG. 7 depicts the user interface window displayed when the resource save mode is not applied because of the high job complexity.

Referring to FIG. 7, the user interface window 700 displays a message informing that the resource save mode is not applied because of the high complexity of the job requested by the user.

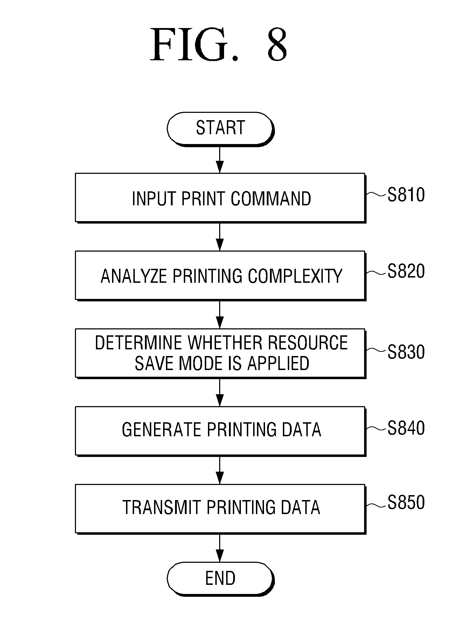

FIG. 8 is a flowchart of a print controlling method according to an exemplary embodiment of the present general inventive concept.

Referring to FIG. 8, the print command for the printing job is input (S810). In detail, the user may select the file to print and input the print command for the corresponding file.

The complexity of the printing job is analyzed (S820). In detail, the complexity may be analyzed by analyzing whether the printing job is the text type, the photo type, the copied type, or the mixed type, based on the correlation between the pixels in the printing jobs, that is, based on the brightness difference between one pixel and its neighboring pixel. Alternatively, the complexity may be analyzed by frequency-converting the printing job. The complexity may be analyzed by converting the printing job into the YCbCr color space and analyzing whether the printing job is the color image or the monochrome image based on the Cb and Cr channel components, excluding the Y channel. These three analysis methods, as explained above, may be carried out in parallel or in series.

According to the analyzed complexity, the method determines whether the resource save mode is applied (S830). In detail, when the image forming apparatus operates in the resource save mode, and the analysis result determines low complexity, the method may determine that the resource save mode is applied. Conversely, when the image forming apparatus does not operate in the resource save mode, or when the resource save mode is applied, but the analysis result determines high complexity, the method may determine that the resource save mode is not applied.

Before determining whether the resource save mode is applied, the method may determine whether the image forming apparatus operates in the resource save mode. That is, the aforementioned analysis and determination may be performed only when the image forming apparatus operates in the resource save mode.

According to the determination result, the method generates the printing data for the printing job (S840). In detail, when the determination result concludes that the resource save mode is not applied, the printing data may be generated by applying the default printing options or the printing options selected by the user, to the selected printing job. Conversely, when the determination result concludes that the resource save mode is applied, that is, when the complexity of the printing job is high, the printing data of the printing job may be generated by utilizing the printing options applied in the resource save mode and the attributes of the printing options.

The generated printing data is transmitted to the image forming apparatus (S850).

Thus, for the printing job of high complexity, the print controlling method may print the job in the normal mode without the user's separate setting or selection. Even for the printing job of low complexity, the print controlling method may print the job in the resource save mode without the user's separate setting or selection. The print controlling method of FIG. 8 may be executed in the printer controlling terminal 100 of FIG. 1 or in other printer controlling terminals.

The print controlling method may be realized as at least one execution program to carry out the print controlling method, and the execution program may be stored to a computer-readable recording medium.

Accordingly, the units of the present general inventive concept may be realized as computer-recordable codes in the computer-readable recording medium. The computer-readable recording medium may be a device capable of storing data readable by a computer system.

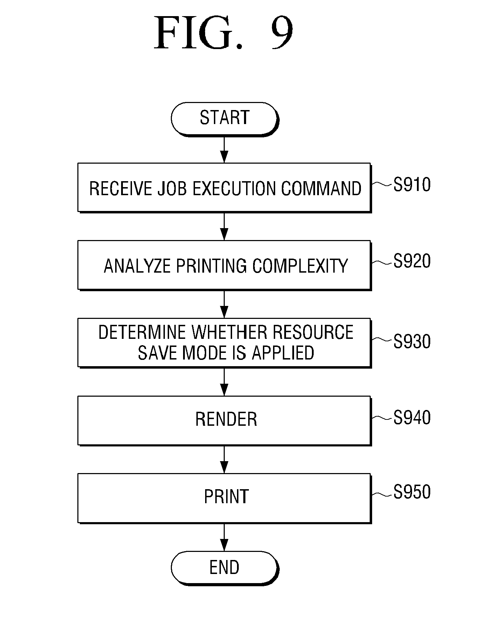

FIG. 9 is a flowchart of an image forming method according to an exemplary embodiment of the present general inventive concept.

Referring to FIG. 9, the job execution command is input (S91 0). Herein, the job execution command may be the copy command to scan and print the document, the print command to print the file stored to the image forming apparatus, or the print command to print the printing data received from the printer controlling terminal. When the job execution command is the copy command, the document may be scanned before analyzing the complexity, to be explained below. When the job execution command is the print command to print the data received from the outside, the printing data may be received from the printer controlling terminal before analyzing the complexity, to be explained below.

Next, the complexity of the input job is analyzed (S920). In detail, when the user's job execution command is the copy command, the complexity of the scanned image may be analyzed. When the user's job execution command is the print command of the printing data, the complexity of the printing data may be analyzed. Since the complexity analysis has been described in FIG. 8, it will not be further explained.

According to the analyzed complexity, the method determines whether the resource save mode is applied to the job (S930). In detail, when the image forming apparatus operates in the resource save mode, and the analysis result determines low complexity, the method may determine that the resource save mode is applied. Conversely, when the image forming apparatus does not operate in the resource save mode, or when the resource save mode is applied, but the analysis result determines high complexity, the method may determine that the resource save mode is not applied.

The job is rendered/executed according to the determination result (S940). In detail, when the resource save mode is not applied according to the determination result, the method may render/execute the job by applying the default printing options or the printing options selected by the user to the selected printing job. Conversely, when the resource save mode is applied according to the determination result, that is, when the complexity of the printing job is not high, the method may render/execute the job by applying the printing options applied in the resource save mode and the attribute values of the printing options.

Next, the rendered/executed job is printed (S950).

Therefore, the image forming method may print the printing job of high complexity in the normal mode without the user's separate setting or selection. The image forming method may print even though the printing job is of low complexity in the resource save mode without the user's separate setting or selection. The image forming method of FIG. 9 may be executed in the image forming apparatus 200 of FIG. 2 or in other image forming apparatuses.

. Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A printer controlling terminal connectable with an image forming apparatus having a resource save mode, comprising:
a user interface unit to input a print command of a printing job;
an analysis unit to analyze a complexity of the printing job;
a determination unit to determine whether the resource save mode is applied, according to the analyzed complexity;
a printer driver unit to generate printing data of the printing job according to the determination result; and
a communication interface unit to transmit the generated printing data to the image forming apparatus.

2. The printer controlling terminal of claim 1, wherein the analysis unit analyzes the complexity of the printing job by analyzing whether the printing job is at least one of a text type, a photo type, a copied type, and a mixed type.

3. The printer controlling terminal of claim 1 or claim 2, wherein the analysis unit analyzes the complexity of the printing job using a Discrete Cosine Transform (DCT).

4. The printer controlling terminal of one of claims 1, 2 and 3, wherein the analysis unit analyzes the complexity of the printing job by analyzing whether the printing job is a color image or a monochrome image.

5. The printer controlling terminal of one of claims 1 to 4, further comprising:
a storage unit to store criterion information to apply the resource save mode,
wherein the determination unit determines whether the resource save mode is applied to the printing job by comparing the analyzed complexity and the stored criterion information.

6. The printer controlling terminal of claim 5, wherein the user interface unit displays a user interface window which comprises a first region to display a criterion to apply the resource save mode and a second region to set whether to apply the criterion, and
the storage unit stores information set in the second region, as the criterion information.

7. The printer controlling terminal of one of claims 1 to 6, wherein, when the resource save mode is not applied according to the determination result, the user interface unit displays that the printing is processed without applying the resource save mode.

8. The printer controlling terminal of one of claims 1 to 7, wherein the communication interface unit receives information of the resource save mode from the image forming apparatus, and
the determination unit determines, based on the received resource save mode information, whether the image forming apparatus operates in the resource save mode, and determines whether the resource save mode is applied to the printing job according to the analyzed complexity and whether the image forming apparatus operates in the resource save mode.

9. The printer controlling terminal of claim 8, wherein the resource save mode information comprises information about whether the image forming apparatus operates in the resource save mode, and information about a printing option applied when the image forming apparatus operates in the resource save mode.

10. The printer controlling terminal of claim 9, wherein, when the resource save mode is applied, the printer driver unit generates the printing data by utilizing the printing option applied when the image forming apparatus operates in the resource save mode.

11. An image forming apparatus having a resource save mode, comprising:
an analysis unit to analyze a complexity of an input job, when a job execution command is input;
a determination unit to determine whether the resource save mode is applied to the job, according to the analyzed complexity; and
an image forming unit to render the job according to the determination result, and to print the rendered job.

12. The image forming apparatus of claim 11, further comprising:
a scanning unit to scan a document,
wherein the analysis unit analyzes the complexity of an image scanned by the scanning unit.

13. The image forming apparatus of claim 11, further comprising:
a communication interface unit to receive printing data,
wherein the analysis unit analyzes the complexity of the received printing data.

14. A print controlling method of a printer controlling apparatus connectable with an image forming apparatus having a resource save mode, comprising:
inputting a print command of a printing job;
analyzing a complexity of the printing job;
determining whether the resource save mode is applied, according to the analyzed complexity;
generating printing data of the printing job according to the determination result; and
transmitting the generated printing data to the image forming apparatus.

15. An image forming method of an image forming apparatus having a resource save mode, comprising:
when a job execution command is input, analyzing a complexity of an input job;
determining whether the resource save mode is applied to the job, according to the analyzed complexity;
rendering the job according to the determination result; and
printing the rendered job.
